# EUROPÄISCHE PATENTSCHRIFT

(11) **EP 4 043 383 B1**
(45) Veröffentlichungstag und Bekanntmachung des Hinweises auf die Patenterteilung: **01.04.2026**
(21) Anmeldenummer: 22154803.5
(22) Anmeldetag: 02.02.2022
(51) Int. Cl.: B66D 1/08, B66D 1/44

(54) **FORTSEILWINDE**
CABLE WINCH
TREUIL FORESTIER

(30) Priorität: 15.02.2021 DE 102021103443; 22.02.2021 DE 102021104131
(43) Veröffentlichungstag der Anmeldung: 17.08.2022
(73) Patentinhaber: Suffel Fördertechnik GmbH & Co. KG, 63741 Aschaffenburg (DE)
(72) Erfinder: WILLENBÜCHER, Michael, 64760 Oberzent (DE); HOFMANN, Claus, 63808 Haibach (DE); WELSCHOF, Bernward, 63762 Großostheim (DE)
(74) Vertreter: Patentship Patentanwaltgesellschaft

(56) Entgegenhaltungen:
- FR-A1- 2 547 569
- GB-A- 2 101 952
- US-A- 3 976 333

## Beschreibung

Die Erfindung betrifft eine Forstseilwinde, die eine von einem Antriebsmotor angetriebene Seiltrommel aufweist, auf der ein Seil aufgespult ist, wobei die Seiltrommel mit einer Bremseinrichtung in Wirkverbindung steht, wobei die Bremseinrichtung als Federspeicherbremse ausgebildet ist, die von einer Federeinrichtung in Richtung einer Bremsstellung und von einem in einer Bremslösedruckleitung anstehenden hydraulischen Bremslösedruck in Richtung einer Lösestellung beaufschlagt ist, wobei der Antriebsmotor als Hydraulikmotor ausgebildet ist, der mittels einer ersten Druckmittelleitung und einer zweiten Druckmittelleitung an eine den Antriebsmotor steuernde Steuerwegeventileinrichtung angeschlossen ist, wobei eine die Druckmittelleitungen verbindende Bypassventileinrichtung vorgesehen ist, die in einer die beiden Druckmittelleitungen verbindenden Verbindungsleitung angeordnet ist und die eine Sperrstellung und eine Durchflussstellung aufweist, wobei die Bypassventileinrichtung von einem in einer Steuerleitung anstehenden hydraulischen Steuerdruck in Richtung der Sperrstellung betätigt ist, wobei die Federspeicherbremse und die Bypassventileinrichtung gemeinsam von einem Steuerventil angesteuert sind, wobei das Steuerventil den die Bypassventileinrichtung in Richtung der Sperrstellung betätigenden Steuerdruck und den die Federspeicherbremse in Richtung der Lösestellung betätigenden Bremslösedruck steuert, derart, dass bei in die Lösestellung angesteuerter Federspeicherbremse die Bypassventileinrichtung in die Sperrstellung beaufschlagt ist sowie bei in die Bremsstellung angesteuerter Federspeicherbremse die Bypassventileinrichtung in die Durchflussstellung beaufschlagt ist, wobei in einer ersten Steuerstellung des Steuerventils die Federspeicherbremse in die Bremsstellung und die Bypassventileinrichtung in die Durchflussstellung beaufschlagt sind und in einer zweiten Steuerstellung des Steuerventils die Federspeicherbremse in die Lösestellung und die Bypassventileinrichtung in die Sperrstellung beaufschlagt sind.

Aus der DE 10 2018 104 810 A1 ist eine mobile Forstmaschine mit einer Forsteilwinde bekannt, die von einem als Hydraulikmotor ausgebildet ist, der mittels einer ersten Druckmittelleitung und einer zweiten Druckmittelleitung an eine den Antriebsmotor steuernde Steuerwegeventileinrichtung angeschlossen ist.

Bekannt ist weiterhin, Forstseilwinden mit einer als Federspeicherbremse ausgebildete Bremseinrichtung auszustatten, mit denen die Seiltrommel mit einem definierten Bremsmoment abgebremst wird.

Sofern eine mit einer Federspeicherbremse ausgestattete Forstseilwinde von einem Hydraulikmotor angetrieben ist, können Betriebszustände auftreten, in denen die Seiltrommel zusätzlich zu dem mechanischen Bremsmoment der Federspeicherbremse von einem hydraulischen Bremsmoment abgebremst wird, beispielsweise wenn sich die Steuerwegeventileinrichtung in einer Sperrstellung befindet, in denen die beiden Druckmittelleitungen abgesperrt sind. Wird bei in der Sperrstellung befindlicher Steuerwegeventileinrichtung auf das Seil eine Zugkraft aufgebracht, beispielsweise durch einen fallenden Baum, baut sich in den abgesperrten Druckmittelleitungen ein Bremsdruck auf, der die Seiltrommel abbremst. Die Summe aus dem Bremsmoment der Federspeicherbremse und dem hydraulischen Bremsmoment kann hierbei zu einem so hohen Gesamtbremsmoment führen, dass eine mit der Forstseilwinde ausgestattete Arbeitsmaschine das Gesamtbremsmoment nicht mehr aufnehmen kann und beschädigt oder zerstört wird.

Aus der FR 2 547 569 A1 ist eine hydraulische Steuervorrichtung für einen Hydromotor bekannt, der eine Kettwinde an Bord von Fischerbooten antreibt.

Die US 3 976 333 A offenbart eine Seilwinde mit den Merkmalen des Oberbegriffs des Patentanspruchs 1.

Der vorliegenden Erfindung liegt die Aufgabe zugrunde, eine gattungsgemäße Forstseilwinde zur Verfügung zu stellen, die die genannten Nachteile vermeidet und einen sicheren Betrieb ermöglicht.

Diese Aufgabe wird erfindungsgemäß dadurch gelöst, dass bei in die zweite Steuerstellung betätigtem Steuerventil zeitlich zuerst die Bypassventileinrichtung in die Sperrstellung betätigt wird und zeitlich anschließend die Federspeicherbremse in die Lösestellung beaufschlagt wird.

Mit der Bypassventileinrichtung kann in der Durchflussstellung eine Kurzschlussverbindung zwischen den beiden Druckmittelleitungen hergestellt werden, in der es vermieden wird, dass sich bei in der Sperrstellung befindlicher Steuerwegeventileinrichtung, in der die beiden Druckmittelleitungen abgesperrt sind, ein die Seiltrommel abbremsender hydraulischer Bremsdruck aufbauen kann. Mit einer derartigen Bypassventileinrichtung kann somit in der Durchflussstellung sichergestellt werden, dass die Seiltrommel nur von dem mechanischen Bremsmoment der Federspeicherbremse abgebremst ist, so dass eine mit der Forstseilwinde ausgestattete Arbeitsmaschine in sicherer und einfacher Weise vor einer Überlastung durch ein zu hohes Bremsmoment an der Seiltrommel geschützt werden kann. Mit einem Steuerventil, das den die Bypassventileinrichtung betätigenden Steuerdruck und den die Federspeicherbremse betätigenden Bremslösedruck steuert und somit die Federspeicherbremse und die Bypassventileinrichtung gemeinsam angesteuert, kann in einfacher Weise eine hohe Funktions- und Betriebssicherheit erzielt werden, da hierdurch in einfacher Weise sichergestellt werden kann, dass bei in die Lösestellung angesteuerter Federspeicherbremse die Bypassventileinrichtung in die Sperrstellung beaufschlagt ist sowie bei in die Bremsstellung angesteuerter Federspeicherbremse die Bypassventileinrichtung in die Durchflussstellung beaufschlagt ist.

Gemäß der Erfindung sind in einer ersten Steuerstellung des Steuerventils die Federspeicherbremse in die Bremsstellung und die Bypassventileinrichtung in die Durchflussstellung und in einer zweiten Steuerstellung des Steuerventils die Federspeicherbremse in die Lösestellung und die Bypassventileinrichtung in die Sperrstellung beaufschlagt. Dies ermöglicht in einfacher Weise eine hohe Funktions- und Betriebssicherheit, da in der ersten Steuerstellung des Steuerventils die Federspeicherbremse in die Bremsstellung und die Bypassventileinrichtung in die Durchflussstellung beaufschlagt sind und in einer zweiten Steuerstellung die Federspeicherbremse in die Lösestellung und die Bypassventileinrichtung in die Sperrstellung beaufschlagt sind. Unsichere Betriebszustände, beispielsweise eine in der Durchflussstellung befindliche Bypassventileinrichtung bei in der Lösestellung beaufschlagter Federspeicherbremse, in denen die Seiltrommel bei einer auf das Seil aufgebrachten Kraft unkontrolliert drehen kann, werden somit in sicherer Weise vermieden.

Gemäß der Erfindung wird bei in die zweite Steuerstellung betätigtem Steuerventil zeitlich zuerst die Bypassventileinrichtung in die Sperrstellung betätigt und zeitlich anschließend die Federspeicherbremse in die Lösestellung beaufschlagt. Hierdurch wird sichergestellt, dass in der zweiten Steuerstellung zuerst die Bypassventileinrichtung in die Sperrstellung betätigt ist, bevor die Federspeicherbremse in die Lösestellung betätigt wird. Hierdurch wird die Funktions- und Betriebssicherheit weiter erhöht, da unsichere Betriebszustände, beispielsweise dass sich die Bypassventileinrichtung noch in der Durchflussstellung befindet wenn die Federspeicherbremse bereits in die Lösestellung betätigt ist, in denen die Seiltrommel bei einer auf das Seil aufgebrachten Kraft unkontrolliert drehen kann, in sicherer und einfacher Weise vermieden werden.

Die Bypassventileinrichtung ist gemäß einer vorteilhaften Ausgestaltungsform der Erfindung von dem in der Steuerleitung anstehenden Steuerdruck in Richtung der Sperrstellung betätigt. Dies ermöglicht eine hohe Funktions- und Betriebssicherheit, da bei fehlendem Steuerdruck und fehlendem Bremslösedruck sichergestellt ist, dass die Federspeicherbremse durch deren Federeinrichtung in die Bremsstellung betätigt ist und die Bypassventileinrichtung beispielsweise durch eine Federeinrichtung in die Durchflussstellung beaufschlagt ist und somit die Seiltrommel nur von dem mechanischen Bremsmoment der Federspeicherbremse abgebremst ist.

Gemäß einer vorteilhaften Ausgestaltungsform der Erfindung ist die Bypassventileinrichtung als direkt von dem Steuerventil angesteuertes Bypassventil ausgebildet, wobei das Steuerventil in der ersten Steuerstellung die Bremslösedruckleitung und die Steuerleitung mit einem Behälter verbindet und in der zweiten Steuerstellung die Bremslösedruckleitung und die Steuerleitung mit einer Steuerdruckquelle verbindet. Das Bypassventil ist somit direkt von dem mit dem Steuerventil erzeugten Steuerdruck angesteuert und betätigt. Sofern das Steuerventil in der ersten Steuerstellung die Bremslösedruckleitung und die Steuerleitung mit einem Behälter verbindet, wird in einfacher Weise erzielt und sichergestellt, dass die Federspeicherbremse in die Bremsstellung und die Bypassventileinrichtung in die Durchflussstellung beaufschlagt sind. Sofern das Steuerventil in der zweiten Steuerstellung die Bremslösedruckleitung und die Steuerleitung mit einer Steuerdruckquelle verbindet, wird in einfacher Weise erzielt und sichergestellt, dass die Federspeicherbremse in die Lösestellung und die Bypassventileinrichtung in die Sperrstellung beaufschlagt sind.

Gemäß einer alternativen und ebenfalls vorteilhaften Ausgestaltungsform der Erfindung ist die Bypassventileinrichtung als von dem Steuerventil vorgesteuertes Bypassventil ausgebildet, wobei das Steuerventil ein Vorsteuerventil betätigt, das in der ersten Schaltstellung die Steuerleitung mit einem Behälter verbindet und in der zweiten Steuerstellung die Steuerleitung mit einer Steuerdruckquelle verbindet, wobei das Steuerventil in einer ersten Steuerstellung die Bremslösedruckleitung und eine zu dem Vorsteuerventil geführte Vorsteuerleitung mit einem Behälter verbindet und in einer zweiten Steuerstellung die Bremslösedruckleitung und die Vorsteuerleitung mit einer Steuerdruckquelle verbindet. Das Bypassventil ist somit von dem mit dem Steuerventil erzeugten Steuerdruck vorgesteuert, wobei der von dem Steuerventil erzeugte Steuerdruck das Vorsteuerventil betätigt, das die Bypassventileinrichtung ansteuert. Mit einer derartigen Vorsteuerung der Bypassventileinrichtung kann eine sichere Betätigung der Bypassventileinrichtung in die Sperrstellung erzielt werden, insbesondere bei einem Bypassventil mit einer großen Nennweite.

Vorteilhafterweise ist das Vorsteuerventil von einer Feder in Richtung der ersten Steuerstellung und von dem in der Vorsteuerleitung anstehenden Vorsteuerdruck in Richtung der zweiten Steuerstellung betätigt. Bei in der zweiten Steuerstellung befindlichem Steuerventil wird somit die Federspeicherbremse in die Lösestellung betätigt und das Vorsteuerventil von dem in der Vorsteuerleitung anstehenden Vorsteuerdruck in die zweite Steuerstellung betätigt, in der durch die Verbindung der Steuerleitung der Bypassventileinrichtung mit der Steuerdruckquelle die Bypassventileinrichtung in die Sperrstellung betätigt ist, wodurch in einfacher Weise erzielt und sichergestellt wird, dass die Federspeicherbremse in die Lösestellung und die Bypassventileinrichtung in die Sperrstellung beaufschlagt sind. Bei in der ersten Steuerstellung befindlichem Steuerventil wird somit die Federspeicherbremse in die Bremsstellung betätigt und das Vorsteuerventil durch die Entlastung der Vorsteuerleitung von der Feder in die erste Steuerstellung betätigt, in der durch die Entlastung der Steuerleitung zum Behälter die Bypassventileinrichtung in die Durchflussstellung betätigt ist, wodurch in einfacher Weise erzielt und sichergestellt wird, dass die Federspeicherbremse in die Bremsstellung und die Bypassventileinrichtung in die Durchflussstellung beaufschlagt sind.

Gemäß einer Weiterbildung der Erfindung ist die Steuerleitung mittels eines Wechselventils mit der Steuerdruckquelle und der ersten Druckmittelleitung verbunden. Mit dem Wechselventil wird entweder der in der Steuerleitung anstehende Steuerdruck oder der in der ersten Druckmittelleitung anstehende Hochdruck ausgewählt, um die Bypassventileinrichtung in die Sperrstellung zu betätigen. Sofern bei entsprechender Betätigung der Steuerwegeventileinrichtung der Antriebsmotor der Seiltrommel durch einen in der ersten Druckmittelleitung anstehenden Hochdruck angetrieben wird, kann mittels der Wechselventileinrichtung in einfacher Weise der Hochdruck zur Ansteuerung der Bypassventileinrichtung ausgewählt werden, um die Bypassventileinrichtung bei angetriebenem Antriebsmotor der Seiltrommel sicher in der Sperrstellung zu halten.

Gemäß einer vorteilhaften Weiterbildung der Erfindung ist in der Steuerleitung ein Freilaufventil angeordnet, das in einer ersten Steuerstellung die Steuerleitung öffnet und in einer zweiten Steuerstellung einen mit der Bypassventileinrichtung verbundenen Abschnitt der Steuerleitung zu einem Behälter entlastet. Mit dem Freilaufventil kann somit in dessen zweiten Steuerstellung durch die Entlastung des mit dem Bypassventil verbundenen Abschnitt der Steuerleitung zum Behälter, die Bypassventileinrichtung beispielsweise von einer Feder in die Durchflussstellung betätigt werden. Bei in der Lösestellung befindlicher Federspeicherbremse kann somit durch Betätigung des Freilaufventils in die zweite Steuerstellung in einfacher Weise die Bypassventileinrichtung in die Durchflussstellung betätigt werden. Dies ermöglicht es in einfacher Weise, dass bei in der Lösestellung befindlicher Federspeicherbremse die Seiltrommel durch eine an dem Seil aufgebrachte Zugkraft gedreht werden kann. Dies ermöglicht beispielsweise bei einem mit der Forstseilwinde ausgestatteten Arbeitsmaschine, das Seil an einem Baum zu befestigen und bei nicht angesteuerter Steuerwegeventileinrichtung bei fahrender Arbeitsmaschine das Seil von der Seiltrommel abzuspulen.

Das Freilaufventil ist vorteilhafterweise von einer Feder in Richtung der ersten Steuerstellung betätigbar ist und von einer elektrischen Betätigungseinrichtung, insbesondere einem Schaltmagnet, in Richtung der zweiten Steuerstellung betätigbar ist. Dies ermöglicht eine hohe Sicherheit, da sich das Freilaufventil bei nicht angesteuerter Betätigungseinrichtung in der die Steuerleitung der Bypassventileinrichtung öffnenden ersten Steuerstellung befindet, in der die Funktionen der Bypassventileinrichtung und der Federspeicherbremseinrichtung von dem Steuerventil gesteuert sind.

Gemäß einer vorteilhaften Ausführungsform der Erfindung ist das Steuerventil von einer Feder in Richtung der ersten Steuerstellung und von einer elektrischen Betätigungseinrichtung, insbesondere einem Schaltmagnet, in Richtung der zweiten Steuerstellung betätigbar. Dadurch wird die Funktions- und Betriebssicherheit weiter erhöht, da sich das Steuerventil bei nicht angesteuerter Betätigungseinrichtung in der ersten Steuerstellung befindet, in der die Federspeicherbremse in die Bremsstellung und die Bypassventileinrichtung in die Durchflussstellung beaufschlagt sind. Mit einer elektrischen Betätigungseinrichtung kann das Steuerventil in einfacher Weise in die zweite Steuerstellung betätigt werden.

Gemäß einer vorteilhaften Ausführungsform der Erfindung ist die Steuerwegeventileinrichtung von hydraulischen Ansteuerdrücken betätigt, wobei das Steuerventil von einer Feder in Richtung der ersten Steuerstellung und von den hydraulischen Ansteuerdrücken der Steuerwegeventileinrichtung in Richtung der zweiten Steuerstellung betätigbar ist. Dadurch wird die Funktions- und Betriebssicherheit weiter erhöht, da sich das Steuerventil bei fehlenden Ansteuerdrücken der Steuerwegeventileinrichtung in der ersten Steuerstellung befindet, in der die Federspeicherbremse in die Bremsstellung und die Bypassventileinrichtung in die Durchflussstellung beaufschlagt sind. Die Verwendung der hydraulischen Ansteuerdrücke der Steuerwegeventileinrichtung zur Betätigung des Steuerventils in die zweite Steuerstellung ermöglicht eine einfache Ansteuerung des Steuerventils ohne zusätzliche elektrische Betätigungseinrichtung.

Gemäß einer vorteilhaften Ausführungsform sind die Federeinrichtung der Federspeicherbremse und eine in Richtung der Durchflussstellung wirkende Federeinrichtung der Bypassventileinrichtung bzw. die Federeinrichtung des Vorsteuerventils derart ausgelegt, dass bei in die zweite Steuerstellung betätigtem Steuerventil zeitlich zuerst die Bypassventileinrichtung in die Sperrstellung betätigt wird und zeitlich anschließend die Federspeicherbremse in die Lösestellung beaufschlagt wird. Mit der Auslegung der Vorspannung der entsprechenden Federeinrichtungen kann bei in die zweite Steuerstellung betätigtem Steuerventil in einfacher Weise die zeitliche Betätigung der Bypassventileinrichtung in die Sperrstellung vor der Betätigung der Federspeicherbremse in die Lösestellung sichergestellt werden.

Gemäß einer alternativen und ebenfalls vorteilhaften Ausführungsform ist in der Bremslösedruckleitung ein in Richtung zur Federspeicherbremse öffnendes, federvorgespanntes Sperrventil, insbesondere Rückschlagventil, angeordnet. Mit einem derartigen federvorgespannten Sperrventil in der Bremslösedruckleitung der Federspeicherbremse kann ebenfalls in einfacher Weise bei in die zweite Steuerstellung betätigtem Steuerventil die zeitliche Betätigung der Bypassventileinrichtung in die Sperrstellung vor der Betätigung der Federspeicherbremse in die Lösestellung sichergestellt werden.

Mit besonderem Vorteil ist hierbei in einer das federvorgespannte Sperrventil umgehenden Umgehungsleitung ein in Richtung zum Steuerventil öffnendes, unvorgespanntes Sperrventil, insbesondere Rückschlagventil, angeordnet. Die Umgehungsleitung ermöglicht es, dass sich der Bremslösedruck in der Bremslösedruckleitung über das geöffnete unvorgespannte Sperrventil schnell zum Behälter abbauen kann, so dass das federvorgespannten Sperrventil das Einfallen der Federspeicherbremse in die Bremsstellung nicht behindert.

Gemäß einer Weiterbildung der Erfindung ist in einer die erste Druckmittelleitung mit der zweiten Druckmittelleitung verbindenden Leitung ein in Richtung zur ersten Druckmittelleitung öffnendes, federvorgespanntes Sperrventil, insbesondere Rückschlagventil, angeordnet. Mit einem derartigen, von der zweiten zur ersten Druckmittelleitung öffnenden federvorgespanntem Sperrventil kann ein Staudruck von der zweiten zur ersten Druckmittelleitung erzeugt werden. Das Sperrventil ermöglicht es beispielsweise, dass bei in der Lösestellung befindlicher Federspeicherbremse die Seiltrommel durch eine an dem Seil aufgebrachte Zugkraft gedreht werden kann. Dies ermöglicht beispielsweise bei einem mit der Forstseilwinde ausgestatteten Arbeitsmaschine, das Seil an einem Baum zu befestigen und bei nicht angesteuerter Steuerwegeventileinrichtung bei fahrender Arbeitsmaschine das Seil von der Seiltrommel abzuspulen.

Gemäß einer Weiterbildung der Erfindung ist die Forsteilwinde mit einer von einem weiteren Antriebsmotor angetriebenen Auswerferrolle für das Seil versehen, wobei der weitere Antriebsmotor als Hydraulikmotor ausgebildet ist, der mittels einer ersten Anschlussleitung und einer zweiten Anschlussleitung an eine den weiteren Antriebsmotor steuernde Steuerwegeventileinrichtung angeschlossen ist. Mit einer von einem weiteren Antriebsmotor angetriebenen Auswerferrolle kann beim Abspulen des Seils von der Seiltrommel sowie beim Aufspulen des Seils auf die Seiltrommel eine gewünschte Seilspannung auf das Seil aufgebracht werden, die ein sicheres und geordnetes Abspulen des Seil von der Seiltrommel und ein sicheres und geordnetes Aufspulen des Seil auf die Seiltrommel beim Aufseilen ermöglicht. Mit der von der angetriebenen Auswerferrolle auf das Seil aufgebrachten Seilspannung können weiterhin für eine Bedienperson, die beim Abspulen des Seils von der Seiltrommel das Seil über eine beträchtliche Strecke von bis zu 100m ziehen muss, geringe Bedienkräfte für das Ziehen des Seils erzielt werden.

Gemäß einer vorteilhaften Ausgestaltung der Erfindung ist in einer die erste Druckmittelleitung mit der zweiten Druckmittelleitung verbindenden Verbindungsleitung ein in Richtung zur ersten Druckmittelleitung öffnendes, unvorgespanntes Sperrventil, insbesondere Rückschlagventil, angeordnet, wobei in der Verbindungsleitung ein von dem Druck in der ersten Anschlussleitung gesteuertes Ventil angeordnet ist, das eine Sperrstellung und eine Durchflussstellung aufweist. Mit dem von dem in der ersten Anschlussleitung gesteuerten Ventil kann der Staudruck von der zweiten zur ersten Druckmittelleitung zwischen einem niedrigen Staudruck des unvorgespannten Sperrventils und einem höheren Staudruck des federvorgespannten Sperrventils umgeschaltet werden. Bei einem Anstieg des Druckes in der ersten Anschlussleitung kann hierdurch auf den höheren Staudruck umgeschaltet werden, so dass bei entsprechender Ansteuerung der Steuerwegeventileinrichtung die Seiltrommel von dem Antriebsmotor derart angetrieben wird, dass die von dem weiteren Antriebsmotor angetriebene Auswerferrolle beim Abspulen des Seils von der in Abspulrichtung angetriebenen Seiltrommel unterstützt wird.

Das Ventil ist vorteilhafterweise von einer Feder in Richtung der Durchflussstellung und von dem Druck in der ersten Anschlussleitung in Richtung der Sperrstellung betätigt. Sofern der Druck in der ersten Anschlussleitung ansteigt und somit der Antriebsmotor der Auswerferrolle zum Abspulen des Seil von der Seilrolle einen hohen Druck benötigt, kann durch die Betätigung des Sperrventils in die Sperrstellung automatisch auf den höheren Staudruck des federvorgespannten Sperrventils umgeschaltet werden, so dass der Antriebsmotor der Seiltrommel ebenfalls in Abspulrichtung des Seil betrieben wird und die Auswerferrolle beim Abspulen des Seils von der Seiltrommel unterstützt.

Die Erfindung betrifft weiterhin eine mobile Arbeitsmaschine, insbesondere eine ferngesteuerte mobile Arbeitsmaschine ohne Fahrerarbeitsplatz, mit einer erfindungsgemäßen Forsteilwinde. Ferngesteuerte mobile Arbeitsmaschine ohne Fahrerarbeitsplatz weisen einen kompakten und leichten Aufbau auf. Mit einer erfindungsgemäßen Bypassventileinrichtung, mit der sichergestellt wird, dass die Seiltrommel nur von dem mechanischen Bremsmoment der Federspeicherbremse abgebremst ist, kann eine leichte und kompakte ferngesteuerte Arbeitsmaschine in sicherer und einfacher Weise vor einer Überlastung durch ein zu hohes Bremsmoment an der Seiltrommel geschützt werden.

Weitere Vorteile und Einzelheiten der Erfindung werden anhand der in den schematischen Figuren dargestellten Ausführungsbeispiele näher erläutert. Hierbei zeigt
- Figur 1: eine erfindungsgemäße Forstseilwinde in einer Prinzipdarstellung,
- Figur 2: eine erste Ausführungsform eines Hydraulikschaltplans einer erfindungsgemäßen Forsteilwinde,
- Figur 3: eine zweite Ausführungsform eines Hydraulikschaltplans einer erfindungsgemäßen Forsteilwinde,
- Figur 4: eine Weiterbildung der Figuren 2 und 3,
- Figur 5: eine Weiterbildung der Figuren 2 bis 4,
- Figur 6: eine Weiterbildung der Figuren 2 bis 5 und
- Figur 7: eine dritte Ausführungsform eines Hydraulikschaltplans einer erfindungsgemäßen Forsteilwinde,

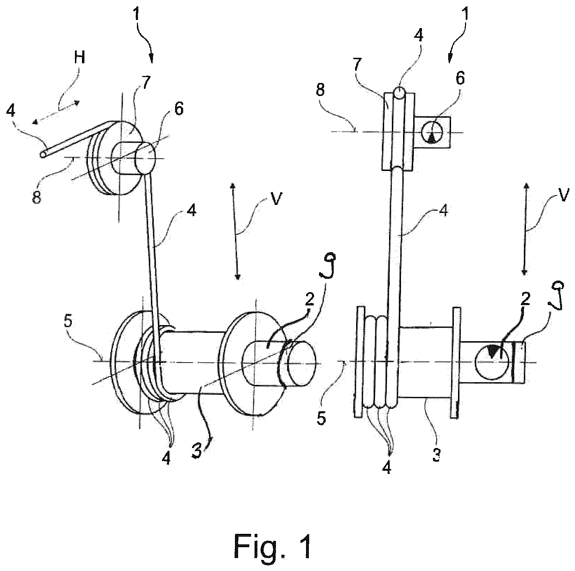

In der Figur 1 ist eine erfindungsgemäße Forstseilwinde 1 in einer schematischen Darstellung gezeigt. Die linke Darstellung der Figur 1 zeigt eine perspektivische Darstellung und die rechte Darstellung eine Vorderansicht der erfindungsgemäße Forstseilwinde 1.

Die Forstseilwinde 1 weist eine von einem Antriebsmotor 2 angetriebene Seiltrommel 3 auf, auf der ein Seil 4, beispielsweise ein Stahlseil, aufgespult ist. Die Seiltrommel 3 ist um eine Drehachse 5 drehbar angeordnet und von dem Antriebsmotor 2 angetrieben, der als Hydraulikmotor ausgebildet ist.

Die Forstseilwinde 1 weist im dargestellten Ausführungsbeispiel weiterhin eine von einem weiteren Antriebsmotor 6 angetriebene Auswerferrolle 7 für das Seil 4 auf. Die Auswerferrolle 7 ist um eine Drehachse 8 drehbar angeordnet und von dem Antriebsmotor 6 angetrieben, der als Hydraulikmotor ausgebildet ist.

Das Seil 4 ist von der Seiltrommel 3 im dargestellten Ausführungsbeispiel in vertikaler Richtung V zu der Auswerferrolle 7 geführt, über die Auswerferrolle 7 geführt und an der Auswerferrolle 7 derart umgelenkt, dass das Seil 4 von der Auswerferrolle 7 in horizontaler Richtung H weggeführt ist.

Das Seil 4 ist mittels einer - in der Figur 1 aus Übersichtlichkeitsgründen nicht näher dargestellten - Anpressvorrichtung auf die Auswerferrolle 7 angepresst.

Die Seiltrommel 3 bzw. der Antriebsmotor 2 steht weiterhin mit einer Bremseinrichtung 9 in Wirkverbindung.

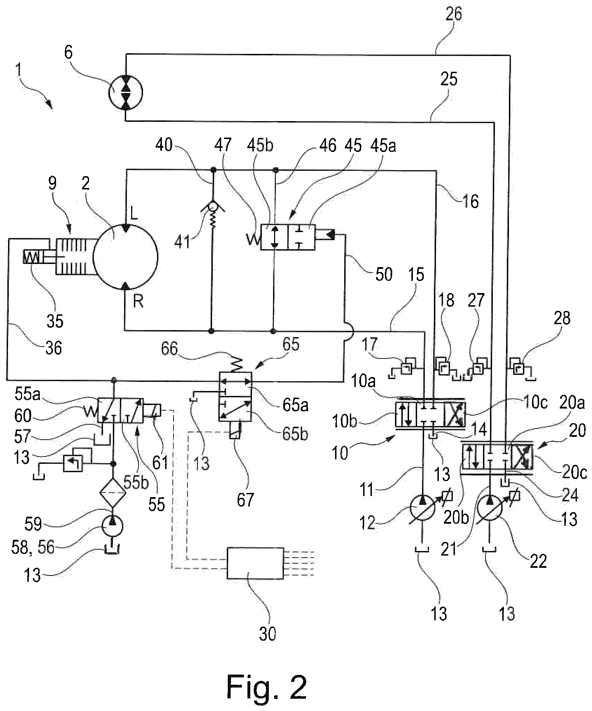

In den Figuren 2 bis 7 sind Hydraulikschaltpläne der erfindungsgemäßen Forsteilwinde 1 dargestellt, wobei gleiche Bauteile mit gleichen Bezugsziffern versehen sind.

In der Figur 2 ist der als Hydraulikmotor ausgebildete Antriebsmotor 2 der Seiltrommel mittels einer Steuerwegeventileinrichtung 10 steuerbar. Die Steuerwegeventileinrichtung 10 ist an eine Förderleitung 11 einer Hydraulikpumpe 12 angeschlossen, die Druckmittel aus einem Behälter 13 ansaugt, an eine zu dem Behälter 13 geführte Tankleitung 14 angeschlossen, sowie an eine mit einem Anschluss R des Antriebsmotors 2 verbundenen erste Druckmittelleitung 15 sowie an eine mit einem Anschluss L des Antriebsmotors 2 verbundenen zweite Druckmittelleitung 16 angeschlossen. An die erste Druckmittelleitung 15 ist ein einen maximalen Arbeitsdruck in der Druckmittelleitung 15 absicherndes Druckbegrenzungsventil 17 angeschlossen. Entsprechend ist an die zweite Druckmittelleitung 16 ein einen maximalen Arbeitsdruck in der Druckmittelleitung 16 absicherndes Druckbegrenzungsventil 18 angeschlossen.

Die Steuerwegeventileinrichtung 10 weist eine Neutralstellung 10a auf, in der die Förderleitung 11, die Tankleitung 14 und die Druckmittelleitungen 15, 16 abgesperrt sind. Die Steuerwegeventileinrichtung 10 weist eine erste Steuerstellung 10b auf, in der die Förderleitung 11 mit der ersten Druckmittelleitung 15 verbunden ist und die zweite Druckmittelleitung 16 mit der Tankleitung 14 verbunden ist. In der ersten Steuerstellung 10b wird der Antriebsmotor 2 in Aufspulrichtung betrieben, in der das Seil auf die Seiltrommel aufgespult wird. Die Steuerwegeventileinrichtung 10 weist eine zweite Steuerstellung 10c auf, in der die Förderleitung 11 mit der zweiten Druckmittelleitung 16 verbunden ist und die erste Druckmittelleitung 15 mit der Tankleitung 14 verbunden ist. In der zweiten Steuerstellung 10c wird der Antriebsmotor 2 in Abspulrichtung betrieben, in der das Seil von der Seiltrommel abgespult wird.

Der als Hydraulikmotor ausgebildete weitere Antriebsmotor 6 der Auswerferrolle ist mittels einer weiteren Steuerwegeventileinrichtung 20 steuerbar. Die Steuerwegeventileinrichtung 20 ist an eine Förderleitung 21 einer weiteren Hydraulikpumpe 22 angeschlossen, die Druckmittel aus dem Behälter 13 ansaugt, an eine zu dem Behälter 13 geführte Tankleitung 24 angeschlossen, sowie an eine mit einem ersten Anschluss des Antriebsmotors 6 verbundenen erste Anschlussleitung 25 sowie an eine mit einem zweiten Anschluss des Antriebsmotors 6 verbundenen zweite Anschlussleitung 26 angeschlossen. An die erste Anschlussleitung 25 ist ein einen maximalen Arbeitsdruck in der Anschlussleitung 25 absicherndes Druckbegrenzungsventil 27 angeschlossen. Entsprechend ist an die zweite Anschlussleitung 26 ein einen maximalen Arbeitsdruck in der Anschlussleitung 26 absicherndes Druckbegrenzungsventil 28 angeschlossen. Es versteht sich, dass alternativ zur Versorgung beider Antriebsmotoren 2, 6 nur eine Hydraulikpumpe 12 bzw. 23 vorgesehen sein kann.

Die Steuerwegeventileinrichtung 20 weist eine Sperrstellung 20a auf, in der die Förderleitung 21, die Tankleitung 24 und die Anschlussleitungen 25, 26 abgesperrt sind. Die Steuerwegeventileinrichtung 20 weist eine erste Steuerstellung 20b auf, in der die Förderleitung 21 mit der ersten Anschlussleitung 25 verbunden ist und die zweite Anschlussleitung 26 mit der Tankleitung 24 verbunden ist. In der ersten Steuerstellung 20b wird der Antriebsmotor 6 in Abspulrichtung betrieben, in der das Seil von der Seiltrommel abgespult wird. Die Steuerwegeventileinrichtung 20 weist eine zweite Steuerstellung 20c auf, in der die Förderleitung 21 mit der zweiten Anschlussleitung 26 verbunden ist und die erste Anschlussleitung 25 mit der Tankleitung 24 verbunden ist.

Die Steuerwegeventile 10, 20 sind als mittels einer elektronischen Steuereinrichtung 30 in die Steuerstellungen 10b, 10c, 20b, 20c ansteuerbar.

Die mit der Seiltrommel 3 bzw. dem Antriebsmotor 2 in Wirkverbindung stehende Bremseinrichtung 9 ist als Federspeicherbremse ausgebildet, die von einer Federeinrichtung 35 in Richtung einer Bremsstellung und von einem in einer Bremslösedruckleitung 36 anstehenden hydraulischen Bremslösedruck in Richtung einer Lösestellung beaufschlagt ist.

In einer die erste Druckmittelleitung 15 mit der zweiten Druckmittelleitung 16 verbindenden Leitung 40 kann ein in Richtung zur ersten Druckmittelleitung 15 öffnendes, federvorgespanntes Sperrventil 41 angeordnet sein. Das Sperrventil 41 ist im dargestellten Ausführungsbeispiel als Rückschlagventil ausgebildet, das von einer Feder in eine Sperrstellung beaufschlagt ist.

Erfindungsgemäß ist eine die beiden Druckmittelleitungen 15, 16 verbindende Bypassventileinrichtung 45 vorgesehen ist, die in einer die beiden Druckmittelleitungen 15, 16 verbindenden Verbindungsleitung 46 angeordnet ist. Die Bypassventileinrichtung 45 ist im dargestellten Ausführungsbeispiel der Figur 2 als Schaltventil ausgebildet, das eine Sperrstellung 45a und eine Durchflussstellung 45b aufweist.

Die Bypassventileinrichtung 45 ist von einem in einer Steuerleitung 50 anstehenden hydraulischen Steuerdruck in Richtung der Sperrstellung 45a betätigt. Die Bypassventileinrichtung 45 ist von einer Federeinrichtung 47 in Richtung der Durchflussstellung 45b betätigt.

Die Federspeicherbremse 9 und die Bypassventileinrichtung 45 sind gemeinsam von einem Steuerventil 55 angesteuert.

In der Figur 2 ist die Bypassventileinrichtung 45 als direkt von dem Steuerventil 55 angesteuertes Bypassventil ausgebildet. Das Steuerventil 55 ist hierzu als Dreianschluss-Zweistellungsventil ausgebildet, das an einem ersten Anschluss an die Steuerleitung 55 und die Bremslösedruckleitung 36 angeschlossen ist, an einem zweiten Anschluss an eine Steuerdruckquelle 56 angeschlossen ist und an einem dritten Anschluss an eine zu dem Behälter 13 geführte Tankleitung 57 angeschlossen ist. Die Steuerdruckquelle 56 ist im dargestellten Ausführungsbeispiel als Speisepumpe 58 ausgebildet, die Druckmittel aus dem Behälter 13 ansaugt und in eine an den zweiten Anschluss des Steuerventils 55 angeschlossenen Förderleitung 59 fördert.

Das Steuerventil 55 weist eine erste Steuerstellung 55a auf, in der die Bremslösedruckleitung 36 und die Steuerleitung 50 mit dem Behälter 13 verbunden sind, und eine zweite Steuerstellung 55b auf, in der die Bremslösedruckleitung 36 und die Steuerleitung 50 mit der Förderleitung 59 der Speisepumpe 58 und somit mit der Steuerdruckquelle 56 verbunden sind. In der ersten Steuerstellung 55a ist weiterhin die Förderleitung 59 abgesperrt. In der zweiten Steuerstellung 55b ist weiterhin die Tankleitung 57 abgesperrt.

Das Steuerventil 55 entlastet somit in der ersten Steuerstellung 55a die Bremslösedruckleitung 36 und die Steuerleitung 50 zum Behälter 13, so dass in der ersten Steuerstellung 55 die Federspeicherbremse 9 von der Federeinrichtung 35 in die Bremsstellung beaufschlagt ist und die Bypassventileinrichtung 45 von der Federeinrichtung 47 in die Durchflussstellung 45b beaufschlagt ist. Das Steuerventil 55 verbindet in der zweiten Steuerstellung 55b die Bremslösedruckleitung 36 und die Steuerleitung 50 mit der Förderleitung 59 der Speisepumpe 58, so dass in der zweiten Steuerstellung 55b die Federspeicherbremse 9 von dem von der Speisepumpe 58 bereitgestellten Förderdruck entgegen der Kraft der Federeinrichtung 35 in die Lösestellung beaufschlagt ist und die Bypassventileinrichtung 45 von dem von der Speisepumpe 58 bereitgestellten Förderdruck entgegen der Kraft der Federeinrichtung 47 in die Sperrstellung 45a beaufschlagt ist.

Das Steuerventil 55 ist von einer Feder 60 in Richtung der ersten Steuerstellung 55a und von einer elektrischen Betätigungseinrichtung 61, beispielsweise einem Schaltmagnet, in Richtung der zweiten Steuerstellung 55b betätigbar. Die Betätigungseinrichtung 61 steht zur Ansteuerung mit der elektronischen Steuereinrichtung 30 in Verbindung.

In der Steuerleitung 50 ist ein Freilaufventil 65 angeordnet, das in einer ersten Steuerstellung 65a die Steuerleitung 50 öffnet und in einer zweiten Steuerstellung 65b einen mit der Bypassventileinrichtung 45 verbundenen Abschnitt der Steuerleitung 50 zu dem Behälter 13 entlastet.

Das Freilaufventil 65 ist von einer Feder 66 in Richtung der ersten Steuerstellung 65a betätigbar und von einer elektrischen Betätigungseinrichtung 67, beispielsweise einem Schaltmagnet, in Richtung der zweiten Steuerstellung 65b betätigbar. Die Betätigungseinrichtung 67 steht zur Ansteuerung mit der elektronischen Steuereinrichtung 30 in Verbindung.

Zum Abbremsen der Seiltrommel durch die Federspeicherbremseinrichtung 9, beispielsweise bei nicht angesteuerter und in der Neutralstellung 10a befindlicher Steuerwegeventileinrichtung 10, sind das Steuerventil 55 und das Freilaufventil 65 nicht angesteuert, so dass sich das Steuerventil 55 in der ersten Steuerstellung 55a und das Freilaufventil 65 in der Steuerstellung 65a befinden. Durch die Entlastung der Bremslösedruckleitung 36 und der Steuerleitung 50 zum Behälter 13 in der ersten Steuerstellung 55a des Steuerventils 55 ist die Federspeicherbremse 9 von der Federeinrichtung 35 in die Bremsstellung beaufschlagt und die Bypassventileinrichtung 45 von der Federeinrichtung 47 in die Durchflussstellung 45b beaufschlagt. Die in der Durchflussstellung 45b befindliche Bypassventileinrichtung 45 stellt hierbei sicher, dass der Antriebsmotor 2 bzw. die Seiltrommel nur von dem mechanischen Bremsmoment der Federspeicherbremse 9 gebremst wird.

Zum Lösen der Federspeicherbremseinrichtung 9 der Seiltrommel, beispielsweise wenn die Steuerwegeventileinrichtung 10 zum Antrieb des Antriebsmotors 2 von der Steuereinrichtung 30 in die Steuerstellung 10b bzw. 10c angesteuert wird, steuert die Steuereinrichtung 30 die Betätigungseinrichtung 61 an, so dass das Steuerventil 55 in die zweite Steuerstellung 55b betätigt wird, in der die Bremslösedruckleitung 36 und die Steuerleitung 50 mit der Förderleitung 59 der Speisepumpe 58 verbunden sind, so dass die Federspeicherbremse 9 von dem von der Speisepumpe 58 bereitgestellten Förderdruck entgegen der Kraft der Federeinrichtung 35 in die Lösestellung beaufschlagt wird und die Bypassventileinrichtung 45 von dem von der Speisepumpe 58 bereitgestellten Förderdruck entgegen der Kraft der Federeinrichtung 47 in die Sperrstellung 45a beaufschlagt wird. Die Ansteuerung der Steuerwegeventileinrichtung 10 und des Steuerventils 55 erfolgt bevorzugt derart, dass die Federspeicherbremse 9 in die Lösestellung und Bypassventileinrichtung 45 in die Sperrstellung 45a betätigt sind, bevor die Steuerwegeventileinrichtung 10 in der Steuerstellung 10b bzw. 10b die Förderleitung 11 mit der Druckmittelleitung 15 bzw. 16 verbindet.

Sofern bei in der Lösestellung befindlicher Federspeicherbremse 9 und in der Sperrstellung 10a befindlicher Steuerwegeventileinrichtung 10 ein Abspulen des Seils von der Seiltrommel ermöglicht werden soll, steuert die Steuereinrichtung 30 durch eine Ansteuerung der Betätigungseinrichtung 67 das Freilaufventil 65 in die zweite Steuerstellung 65b, in der der mit der Bypassventileinrichtung 50 verbundene Abschnitt der Steuerleitung 55 zu dem Behälter 13 entlastet ist und somit die Bypassventileinrichtung 45 von der Federeinrichtung 47 in die Durchflussstellung 45b betätigt wird. Bei in der Lösestellung befindlicher Federspeicherbremse 9 und in der Durchflussstellung 45b befindlicher Bypassventileinrichtung 45 kann somit mit einer an dem Seil aufgebrachte Zugkraft die Seiltrommel gedreht und das Seil von der Seiltrommel abgespult werden. Dies ermöglicht beispielsweise bei einem mit der Forstseilwinde ausgestatteten Arbeitsmaschine, das Seil an einem Baum zu befestigen und bei nicht angesteuerter Steuerwegeventileinrichtung 10 bei fahrender Arbeitsmaschine das Seil von der Seiltrommel durch den in der Durchflussstellung 45b des Bypassventils 45 hergestellten hydraulischen Kurzschluss des Antriebsmotors 2 abzuspulen.

Das gegebenenfalls vorhandene Rückschlagventil 41 ermöglicht es, den Antriebsmotor 2 der Seiltrommel in der zweiten Steuerstellung 10c der Steuerwegeventileinrichtung 10 mit einem durch die Vorspannung der Feder des Sperrventil 41 begrenzten Druck in Abspulrichtung anzutreiben.

Mit dem Steuerventil 55 werden somit zum Lösen der Federspeicherbremseinrichtung 9 in der zweite Steuerstellung 55b mit einem Signal (Förderdruck der Speisepumpe 58) am ersten Anschluss, an den die Steuerleitung 55 und die Bremslösedruckleitung 36 angeschlossen sind, die Federspeicherbremseinrichtung 9 in die Lösestellung betätigt und die Bypassventileinrichtung 45 in die Sperrstellung 45a betätigt. Für eine hohe Funktions- und Betriebssicherheit ist hierbei vorgesehen, dass bei in die zweite Steuerstellung 55b betätigtem Steuerventil 55 zeitlich zuerst die Bypassventileinrichtung 45 in die Sperrstellung 45a betätigt wird und zeitlich anschließend die Federspeicherbremse 9 in die Lösestellung beaufschlagt wird.

In der Figur 2 sind für diese zeitliche Betätigung des Bypassventileinrichtung 45 in die Sperrstellung 45a bevor die Federspeicherbremse 9 in die Lösestellung 13 beaufschlagt wird die Federeinrichtung 35 der Federspeicherbremse 9 und die Federeinrichtung 47 der Bypassventileinrichtung 45 entsprechend ausgelegt. Bevorzugt ist die Vorspannung der Federeinrichtung 47 der Bypassventileinrichtung 45 geringer gewählt als die Vorspannung der Federeinrichtung 35 der Federspeicherbremse 9, beispielsweise die Vorspannung der Federeinrichtung 47 der Bypassventileinrichtung 45 auf ca. 2bar eingestellt und die Vorspannung der Federeinrichtung 35 der Federspeicherbremse 9 auf ca. 10bar eingestellt, so dass bei der Verbindung der Bremslösedruckleitung 36 und der Steuerleitung 50 mit der Förderleitung 59 in der zweiten Steuerstellung 55b des Steuerventils 55 das Bypassventil 45 in die Sperrstellung 45a betätigt ist, bevor die Federspeicherbremseinrichtung 9 entgegen der Vorspannung der Federeinrichtung 35 in die Lösestellung betätigt wird.

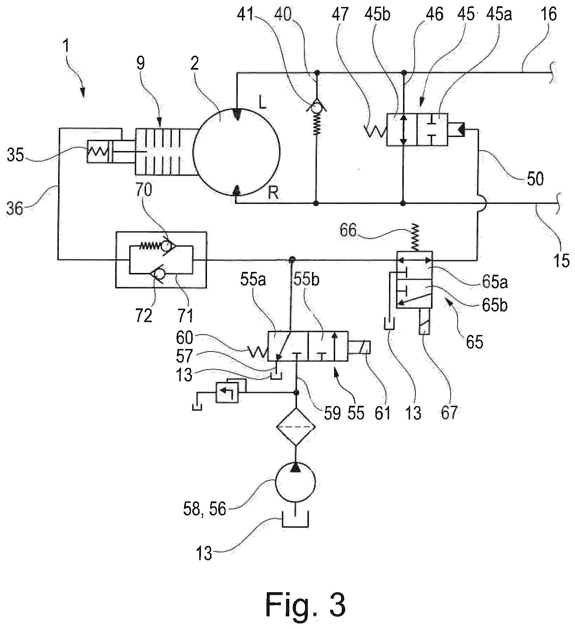

In der Figur 3 ist eine Variante der Figur 2 dargestellt, bei der die zeitliche Betätigung der Bypassventileinrichtung 45 in die Sperrstellung 45a vor der Beaufschlagung der Federspeicherbremse 9 in die Lösestellung 13 in einer alternativen Weise umgesetzt ist.

In der Figur 3 ist hierfür in der Bremslösedruckleitung 35 ein in Richtung zur Federspeicherbremse 9 öffnendes, federvorgespanntes Sperrventil 70, beispielsweise Rückschlagventil, angeordnet. Das federvorgespannte Sperrventil 70 ist in der Vorspannung derart ausgeführt, dass in der zweiten Steuerstellung 55b des Steuerventils 55 sichergestellt ist, dass zuerst die Bypassventileinrichtung 45 in die Sperrstellung 45a betätigt wird bevor die Federspeicherbremse 9 in die Lösestellung 13 betätigt wird.

In einer das federvorgespannte Sperrventil 70 umgehenden Umgehungsleitung 71 ist ein in Richtung zum Steuerventil 55 öffnendes, unvorgespanntes Sperrventil 72, beispielsweise ein Rückschlagventil, angeordnet. Das Sperrventil 72 ermöglicht es, dass in der ersten Steuerstellung 55a des Steuerventils 55 der in der Bremslösedruckleitung 36 anstehende Bremslösedruck über das sich öffnende Sperrventil 72 schnell zum Behälter 13 abbauen kann.

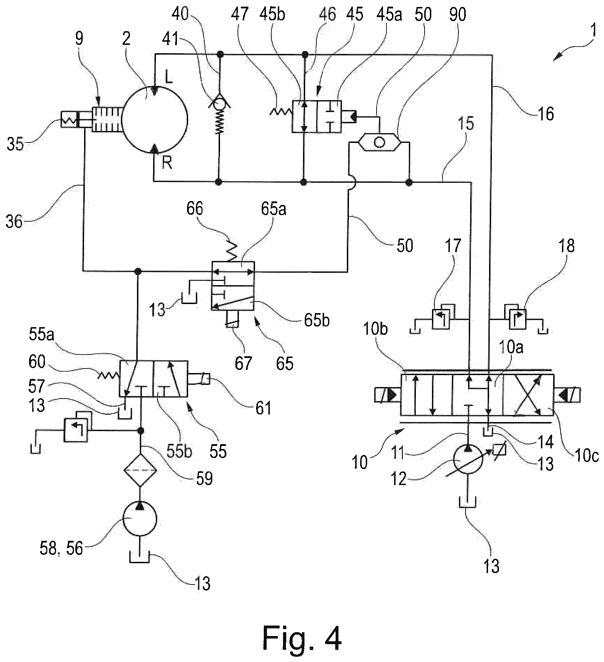

Die Figur 4 zeigt eine Variante der Figuren 2 und 3, bei der das Bypassventil 45 zusätzlich von dem in der ersten Druckmittelleitung 15 anstehenden Druck in die Sperrstellung 45a betätigbar ist.

Die Steuerleitung 50 ist hierzu mittels eines Wechselventils 90 mit der Steuerdruckquelle 56 und der ersten Druckmittelleitung 15 verbunden. Das Wechselventil 90 ist hierzu an einem Ausgang mit dem zum Bypassventil 45 geführten Abschnitt der Steuerleitung 50 verbunden, an einem ersten Eingang mit dem über das Freilaufventil 65 und das Steuerventil 55 mit dem mit der Steuerdruckquelle 56 verbundenen Abschnitt der Steuerleitung 50 verbunden und an einem weiteren Eingang mit der ersten Druckmittelleitung 15 verbunden.

Sofern in der ersten Druckmittelleitung 15 ein entsprechender Druck ansteht, beispielsweise wenn die Steuerwegeventileinrichtung 10 in die erste Steuerstellung 10b betätigt ist, wird das Bypassventil 45 von dem in der ersten Druckmittelleitung 15 anstehenden Druck in die Sperrstellung 45a betätigt und gehalten. Dadurch kann ein sicheres Schließen des Bypassventils 45 erzielt werden.

In der Figur 4 sind weiterhin in der Neutralstellung 10a der Steuerwegeventileinrichtung 10 die Druckmittelleitungen 15, 16 zum Behälter 13 entlastet. Dadurch wird ermöglicht, dass in der Neutralstellung 10a der Steuerwegeventileinrichtung 10 die Druckmittelleitung 15 entlastet ist, so dass das Bypassventil 45 von der Federeinrichtung 47 in die Durchflussstellung 45b betätigt werden kann.

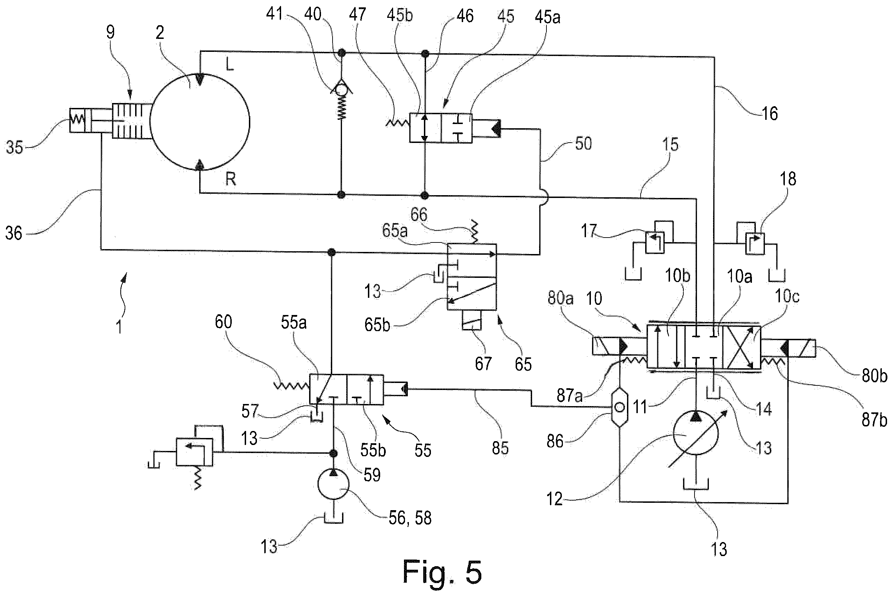

In den Figuren 2 bis 4 ist das Steuerventil 55 von der elektrischen Betätigungseinrichtung 61 elektrisch betätigt. Die Figur 5 zeigt eine Variante der Figuren 2 bis 4, bei der das Steuerventil 55 ohne zusätzliche elektrische Betätigungseinrichtung 61 in die zweite Steuerstellung 55b betätigbar ist.

In der Figur 5 ist die Steuerwegeventileinrichtung 10 elektro-hydraulisch angesteuert, wobei von elektrisch angesteuerten Vorsteuerventilen 80a, 80b hydraulische Ansteuerdrücke erzeugt werden, die die Steuerwegeventileinrichtung 10 in die Steuerstellungen 10b bzw. 10c betätigen. Das Steuerventil 55 ist in der Figur 4 von der Feder 60 in Richtung der ersten Steuerstellung 55a und von den hydraulischen Ansteuerdrücken der Steuerwegeventileinrichtung 10 in Richtung der zweiten Steuerstellung 55b betätigbar. Eine entsprechende Steuerfläche des Steuerventils 55 ist hierzu an eine Steuerdruckleitung 85 angeschlossen, die über ein Wechselventil 86 den entsprechenden Ansteuerduck der Steuerwegeventileinrichtung 10 zur Betätigung des Steuerventils 55 auswählt. Die Steuerwegeventileinrichtung 10 ist weiterhin von Federn 87a, 87b in die Neutralstellung 10a vorgespannt und zentriert. In der Figur 5 sind die Vorspannungen der Federn 87a, 87b höher ausgeführt als die Vorspannung der Feder 60 des Steuerventils 55. Sofern eines der Vorsteuerventile 80a, 80b angesteuert wird, wird hierdurch erzielt, dass der vom Vorsteuerventil 80a bzw. 80b erzeugte Ansteuerdruck das Steuerventil 55 in die zweite Steuerstellung 55b betätigt, bevor sich die Steuerwegeventileinrichtung 10 in die Steuerstellung 10b bzw. 10c bewegt, so dass die Federspeicherbremse 9 in die Lösestellung und Bypassventileinrichtung 45 in die Sperrstellung 45a betätigt sind, bevor die Steuerwegeventileinrichtung 10 in der Steuerstellung 10b bzw. 10c die Förderleitung 11 mit der Druckmittelleitung 15 bzw. 16 verbindet.

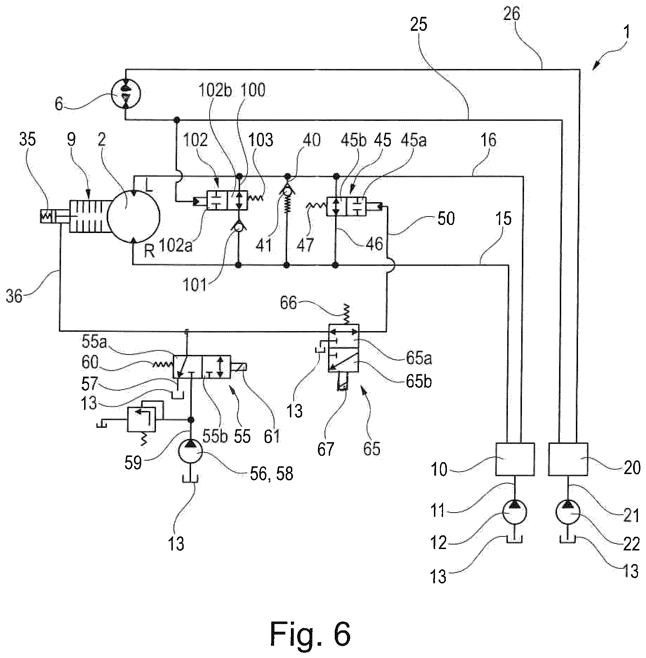

In der Figur 6 ist eine Variante der Figuren 2 bis 5 dargestellt, bei der in einer die erste Druckmittelleitung 15 mit der zweiten Druckmittelleitung 16 verbindenden Verbindungsleitung 100 ein in Richtung zur ersten Druckmittelleitung 15 öffnendes, unvorgespanntes Sperrventil 101, beispielsweise ein Rückschlagventil, angeordnet ist.

In der Verbindungsleitung 100 ist weiterhin ein von dem Druck in der ersten Anschlussleitung 25 gesteuertes Ventil 102 angeordnet, das eine Sperrstellung 102a und eine Durchflussstellung 102b aufweist. Das Ventil 102 ist von einer Feder 103 in Richtung der Durchflussstellung 102b und von dem Druck in der ersten Anschlussleitung 25 in Richtung der Sperrstellung 102a betätigt.

In der Figur 6 sind somit zwei Sperrventile 41, 101 vorgesehen, die die zweite Druckmittelleitung 16 mit der ersten Druckmittelleitung 15 verbinden, wobei das federbelastete Sperrventil 41 einen höheren Staudruck von der zweiten Druckmitteleitung 16 zur ersten Druckmittelleitung 15 erzeugt wie das unbelastete Sperrventil 101. Mit dem vom Druck und somit der Belastung des Antriebsmotors 6 der Auswerferrolle gesteuerten Ventil 102 kann hierbei der Staudruck von der zweiten Druckmitteleitung 16 zur ersten Druckmittelleitung 15 zwischen dem niedrigen Druck des Sperrventils 101 auf den erhöhten Druck des Sperrventils 41 umgeschaltet werden.

Die Figur 6 ermöglicht es, das Abspulen des Seils von der Seiltrommel durch den Antriebsmotor 6 der Auswerferrolle mit dem Antriebsmotor 2 in Abhängigkeit von der Belastung des Antriebsmotors 6 zu unterstützen.

Zum Abspulen des Seils von der Seiltrommel ist die Steuerwegeventileinrichtung 10 in Richtung der zweiten Steuerstellung 10c betätigt und die Steuerwegeventileinrichtung 20 in Richtung der Steuerstellung 20b betätigt.

In der Steuerstellung 20b wird der Antriebsmotor 6 der Auswerferrolle von dem in der ersten Anschlussleitung 25, die mit der Förderleitung 21 der Hydraulikpumpe 22 verbunden ist, zuströmenden Volumenstrom in Abspulrichtung angetrieben. Sofern zum Antrieb des Antriebsmotors 6 der Auswerferrolle ein Druck in der ersten Anschlussleitung 25 ausreicht, der geringer als die Vorspannung der Feder 103 des Ventils 102 ist, die beispielswiese 100bar beträgt, ist das Ventil 102 von der Feder 103 in die Durchflussstellung 102b beaufschlagt. Der in der Druckmittelleitung 16, die in der Steuerstellung 10c der Steuerwegeventileinrichtung 10 mit der Förderleitung 11 der Hydraulikpumpe 12 verbunden ist, zuströmende Volumenstrom kann somit über das sich öffnende Sperrventil 101 bei geringem Staudruck in die Druckmittelleitung 15 abströmen, die in der Steuerstellung 10c der Steuerwegeventileinrichtung 10 mit dem Behälter 13 verbunden ist, so dass der Antriebsmotor 2 der Seiltrommel frei mitdrehen kann und das Seil mittels der vom Antriebsmotor 6 angetriebenen Auswerferrolle von der Seiltrommel abgespult wird. Steigt die Belastung des Antriebsmotors 6 der Auswerferrolle an und der Antriebsmotors 6 der Auswerferrolle benötigt zum Antrieb einen Druck in der ersten Anschlussleitung 25, der höher als die Vorspannung der Feder 103 des Ventils 102 ist, wird das Ventil 102 von dem in der ersten Anschlussleitung 25 anstehenden Druck in die Sperrstellung 102a beaufschlagt. Von dem Sperrventil 101 wird somit auf das auf einen höheren Staudruck eingestellte Sperrventil 41 umgeschaltet, wodurch der Antriebsmotor 2 der Seiltrommel mit dem an dem Sperrventil 41 eingestellten Staudruck in Abspulrichtung mitangetrieben wird. Die von dem Antriebsmotor 2 angetriebene Seiltrommel unterstützt somit den Antriebsmotor 6 der Auswerferrolle beim Abspulen des Seils von der Seiltrommel.

In den Figuren 2 bis 6 ist die Bypassventileinrichtung 45 als direkt von dem Steuerventil 55 angesteuertes Bypassventil ausgebildet.

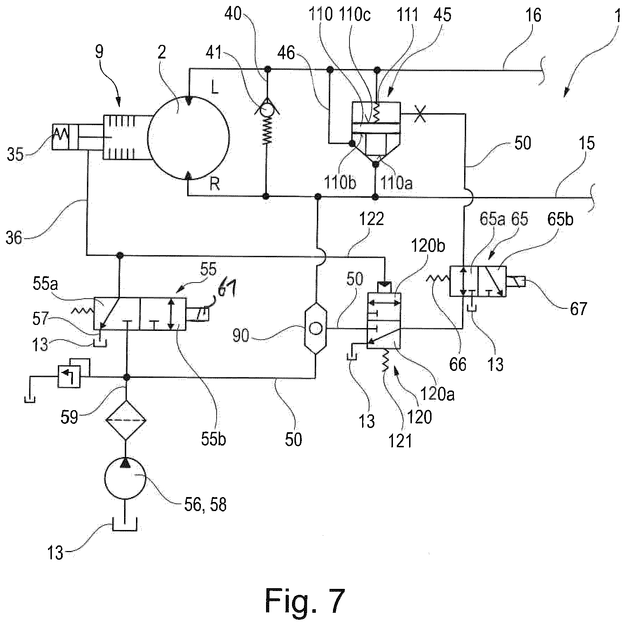

Die Figur 7 zeigt eine Variante der Figuren 2 bis 7 mit einer Bypassventileinrichtung 45, die als vorgesteuerten Bypassventil 45 ausgebildet ist.

Das Bypassventil 45 der Figur 7 ist als Sitzventil ausgebildet. Das Sitzventil weist einen Sperrkolben 110 auf, der einen Ventilsitz in der Verbindungsleitung 46 ansteuert.

Der Sperrkolben 110 weist eine erste Steuerfläche 110a auf, die in Richtung einer Durchflussstellung wirkt und von dem in der ersten Druckmittelleitung 15 anstehenden Druck beaufschlagt ist, eine zweite Steuerfläche 110b auf, die in Richtung einer Durchflussstellung wirkt und von dem in der zweiten Druckmittelleitung 16 anstehenden Druck beaufschlagt ist, und eine dritte Steuerfläche 110c auf, die in Richtung einer Sperrstellung wirkt und von dem in der Steuerleitung 50 anstehenden Druck und dem in der zweiten Druckmittelleitung 16 anstehenden Druck beaufschlagt ist. In Richtung der Sperrstellung ist der Sperrkolben 110 weiterhin von einer Feder 111 beaufschlagt.

Das Bypassventil 45 ist von dem Steuerventil 55 vorgesteuert, wobei das Steuerventil 55 ein Vorsteuerventil 120 betätigt, das in der ersten Schaltstellung 120a den mit dem Bypassventil 45 verbundenen Abschnitt der Steuerleitung 50 mit dem Behälter 13 verbindet und in der zweiten Steuerstellung 120b die Steuerleitung 50 mit der Steuerdruckquelle 56 verbindet.

Das Vorsteuerventil 120 ist von einer Feder 121 in Richtung der ersten Steuerstellung 120a betätigt und von einem in einer Vorsteuerleitung 122 anstehenden Vorsteuerdruck in Richtung der zweiten Steuerstellung 120b betätigt. Die Vorsteuerleitung 122 ist zusammen mit der Bremslösedruckleitung 36 an den ersten Anschluss des als Dreianschluss-Zweistellungsventil ausgebildeten Steuerventils 55 angeschlossen ist.

Der Aufbau des Steuerventils 55 der Figur 7 entspricht dem Aufbau des Steuerventils 55 der Figuren 2 bis 6, so dass das Steuerventil 55 in einer ersten Steuerstellung 55a die Bremslösedruckleitung 36 und die zu dem Vorsteuerventil 120 geführte Vorsteuerleitung 122 mit dem Behälter 13 verbindet und in einer zweiten Steuerstellung 55b die Bremslösedruckleitung 36 und die Vorsteuerleitung 122 mit der Steuerdruckquelle 56 verbindet.

In dem Ausführungsbeispiel der Figur 7 ist analog zu dem Ausführungsbeispiel der Figur 4 das Bypassventil 45 zusätzlich von dem in der ersten Druckmittelleitung 15 anstehenden Druck in die Sperrstellung betätigbar.

Die Steuerleitung 50 ist hierzu mittels des Wechselventils 90 mit der Steuerdruckquelle 56 und der ersten Druckmittelleitung 15 verbunden. Das Wechselventil 90 ist hierzu an einem Ausgang mit dem zum Vorsteuerventil 120 geführten Abschnitt der Steuerleitung 50 verbunden, an einem ersten Eingang mit dem mit dem mit der Steuerdruckquelle 56 verbundenen Abschnitt der Steuerleitung 50 verbunden und an einem weiteren Eingang mit der ersten Druckmittelleitung 15 verbunden. Die Steuerleitung 50 ist in dem Ausführungsbeispiel der Figur 7 an die zu dem Steuerventil 55 geführte Förderleitung 59 der Steuerdruckpumpe 58 angeschlossen.

In dem von dem Vorsteuerventil 120 zum Bypassventil 45 geführten Abschnitt der Steuerleitung 50 ist das Freilaufventil 65 angeordnet, dessen Aufbau dem Freilaufventil 65 der Figuren 2 bis 6 entspricht.

Zum Abbremsen der Seiltrommel durch die Federspeicherbremseinrichtung 9, beispielsweise bei nicht angesteuerter und in der Neutralstellung 10a befindlicher Steuerwegeventileinrichtung 10, sind das Steuerventil 55 und das Freilaufventil 65 nicht angesteuert, so dass sich das Steuerventil 55 in der ersten Steuerstellung 55a und das Freilaufventil 65 in der Steuerstellung 65a befinden. Durch die Entlastung der Bremslösedruckleitung 36 und der Vorsteuerleitung 122 zum Behälter 13 in der ersten Steuerstellung 55a des Steuerventils 55 ist die Federspeicherbremse 9 von der Federeinrichtung 35 in die Bremsstellung beaufschlagt und das Vorsteuerventil 120 von der Feder 121 in die erste Steuerstellung 120a beaufschlagt, so dass der mit Steuerfläche 110c des Bypassventils 45 verbundenen Abschnitt der Steuerleitung 50 zum Behälter 13 entlastet ist und das Bypassventil, 45 von einem geringfügigen Druck an einer der Steuerflächen 110a oder 110b in die Durchflussstellung 45b aufgesteuert wird. Die in der Durchflussstellung 45b befindliche Bypassventileinrichtung 45 stellt hierbei sicher, dass der Antriebsmotor 2 bzw. die Seiltrommel nur von dem mechanischen Bremsmoment der Federspeicherbremse 9 gebremst wird.

Zum Lösen der Federspeicherbremseinrichtung 9 der Seiltrommel wird in der Figur 7 das Steuerventil 55 in die zweite Steuerstellung 55b betätigt, in der die Bremslösedruckleitung 36 und die Vorsteuerleitung 122 mit der Förderleitung 59 der Speisepumpe 58 verbunden sind, so dass die Federspeicherbremse 9 von dem von der Speisepumpe 58 bereitgestellten Förderdruck entgegen der Kraft der Federeinrichtung 35 in die Lösestellung beaufschlagt wird und das Vorsteuerventil 120 von dem in der Vorsteuerleitung 122 anstehenden Vorsteuerdruck in die zweite Steuerstellung 120b betätigt wird, in der von dem Wechselventil 90 gesteuert wahlweise der Förderdruck der Speisepumpe 58 oder der Hochdruck der ersten Druckmittelleitung 15 an der Steuerfläche 110c des Sperrkolbens 110 ansteht, wodurch die Bypassventileinrichtung 45 in die Sperrstellung beaufschlagt wird.

Für die hohe Funktions- und Betriebssicherheit, wobei bei in die zweite Steuerstellung 55b betätigtem Steuerventil 55 zeitlich zuerst die Bypassventileinrichtung 45 in die Sperrstellung 45a betätigt wird und zeitlich anschließend die Federspeicherbremse 9 in die Lösestellung beaufschlagt wird, können in der Figur 7 analog zur Figur 2 die Federvorspannungen entsprechend gewählt werden oder analog zur Figur 3 in der Bremslösedruckleitung 36 die aus den beiden Sperrventilen 70, 72 bestehende Sperrventilkombination eingesetzt werden.

Das Ausführungsbeispiel der Figur 7 eignet sich besonders für eine Bypassventileinrichtung 45 mit einer großen Nennweite und ermöglicht bei einem derartigen Bypassventil eine sichere Beaufschlagung in die Sperrstellung zum Trennen der beiden Druckmittelleitungen 15, 16 beim Lösen der Federspeicherbremse 9.

Die Erfindung ist nicht auf die in den dargestellten Figuren dargestellten Ausführungsbeispiel beschränkt.

In den Figuren 1 bis 5 und 7 kann die Leitung 40 mit dem Sperrventil 41 auch entfallen.

Die Ausführungsformen der Figuren 2 und 3 können jeweils mit dem Wechselventil 90 der Figur 4 und/oder der hydraulischen Ansteuerung des Steuerventils 55 gemäß der Figur 5 und/oder dem weiteren Sperrventil 101 gemäß der Figur 6 kombiniert werden.

Es versteht sich weiterhin, dass in der Figur 7 auch eine hydraulische Betätigung des Steuerventils 55 analog zur Figur 5 und/oder ein weiteres Sperrventil 101 gemäß der Figur 6 eingesetzt werden kann.

## Patentansprüche

1. Forstseilwinde (1), die eine von einem Antriebsmotor (2) angetriebene Seiltrommel (3) aufweist, auf der ein Seil (4) aufgespult ist, wobei die Seiltrommel mit einer Bremseinrichtung (9) in Wirkverbindung steht, wobei die Bremseinrichtung (9) als Federspeicherbremse ausgebildet ist, die von einer Federeinrichtung (35) in Richtung einer Bremsstellung und von einem in einer Bremslösedruckleitung (36) anstehenden hydraulischen Bremslösedruck in Richtung einer Lösestellung beaufschlagt ist, wobei der Antriebsmotor (2) als Hydraulikmotor ausgebildet ist, der mittels einer ersten Druckmittelleitung (15) und einer zweiten Druckmittelleitung (16) an eine den Antriebsmotor (2) steuernde Steuerwegeventileinrichtung (10) angeschlossen ist, wobei eine die Druckmittelleitungen (15, 16) verbindende Bypassventileinrichtung (45) vorgesehen ist, die in einer die beiden Druckmittelleitungen (15, 16) verbindenden Verbindungsleitung (46) angeordnet ist und die eine Sperrstellung (45a) und eine Durchflussstellung (45b) aufweist, wobei die Bypassventileinrichtung (45) von einem in einer Steuerleitung (50) anstehenden hydraulischen Steuerdruck in Richtung der Sperrstellung (45a) betätigt ist, wobei die Federspeicherbremse (9) und die Bypassventileinrichtung (45) gemeinsam von einem Steuerventil (55) angesteuert sind, wobei das Steuerventil (55) den die Bypassventileinrichtung (45) in Richtung der Sperrstellung (45a) betätigenden Steuerdruck und den die Federspeicherbremse (9) in Richtung der Lösestellung betätigenden Bremslösedruck steuert, derart, dass bei in die Lösestellung angesteuerter Federspeicherbremse (9) die Bypassventileinrichtung (45) in die Sperrstellung (45a) beaufschlagt ist sowie bei in die Bremsstellung angesteuerter Federspeicherbremse (9) die Bypassventileinrichtung (45) in die Durchflussstellung (45b) beaufschlagt ist, wobei in einer ersten Steuerstellung (55a) des Steuerventils (55) die Federspeicherbremse (9) in die Bremsstellung und die Bypassventileinrichtung (45) in die Durchflussstellung (45b) beaufschlagt sind und in einer zweiten Steuerstellung (55b) des Steuerventils (55) die Federspeicherbremse (9) in die Lösestellung und die Bypassventileinrichtung (45) in die Sperrstellung (45a) beaufschlagt sind, **dadurch gekennzeichnet, dass** bei in die zweite Steuerstellung (55b) betätigtem Steuerventil (55) zeitlich zuerst die Bypassventileinrichtung (45) in die Sperrstellung (45a) betätigt wird und zeitlich anschließend die Federspeicherbremse (9) in die Lösestellung beaufschlagt wird.

2. Forstseilwinde nach Anspruch 1, **dadurch gekennzeichnet, dass** die Bypassventileinrichtung (45) von dem in der Steuerleitung (50) anstehenden Steuerdruck in Richtung der Sperrstellung (45a) betätigt ist.

3. Forstseilwinde nach Anspruch 1 oder 2, **dadurch gekennzeichnet, dass** die Bypassventileinrichtung (45) als direkt von dem Steuerventil (55) angesteuertes Bypassventil ausgebildet ist, wobei das Steuerventil (55) in der ersten Steuerstellung (55a) die Bremslösedruckleitung (36) und die Steuerleitung (50) mit einem Behälter (13) verbindet und in der zweiten Steuerstellung (55b) die Bremslösedruckleitung (36) und die Steuerleitung (50) mit einer Steuerdruckquelle (56) verbindet.

4. Forstseilwinde Anspruch 1 oder 2, **dadurch gekennzeichnet, dass** die Bypassventileinrichtung (45) als von dem Steuerventil (55) vorgesteuertes Bypassventil ausgebildet ist, wobei das Steuerventil (55) ein Vorsteuerventil (120) betätigt, das in der ersten Schaltstellung (120a) die Steuerleitung (50) mit einem Behälter (13) verbindet und in der zweiten Steuerstellung (120b) die Steuerleitung (50) mit einer Steuerdruckquelle (56) verbindet, wobei das Steuerventil (55) in einer ersten Steuerstellung (55a) die Bremslösedruckleitung (36) und eine zu dem Vorsteuerventil (120) geführte Vorsteuerleitung (122) mit einem Behälter (13) verbindet und in einer zweiten Steuerstellung (55b) die Bremslösedruckleitung (36) und die Vorsteuerleitung (122) mit einer Steuerdruckquelle (56) verbindet.

5. Forstseilwinde nach Anspruch 4, **dadurch gekennzeichnet, dass** das Vorsteuerventil (120) von einer Feder (121) in Richtung der ersten Steuerstellung (120a) und von dem in der Vorsteuerleitung (122) anstehenden Vorsteuerdruck in Richtung der zweiten Steuerstellung (121b) betätigt ist.

6. Forstseilwinde nach einem der Ansprüche 1 bis 5, **dadurch gekennzeichnet, dass** die Steuerleitung (50) mittels eines Wechselventils (90) mit der Steuerdruckquelle (56) und der ersten Druckmittelleitung (15) verbunden ist.

7. Forstseilwinde nach einem der Ansprüche 1 bis 6, **dadurch gekennzeichnet, dass** in der Steuerleitung (50) ein Freilaufventil (65) angeordnet ist, das in einer ersten Steuerstellung (65a) die Steuerleitung (50) öffnet und in einer zweiten Steuerstellung (65b) einen mit der Bypassventileinrichtung (45) verbundenen Abschnitt der Steuerleitung (50) zu einem Behälter (13) entlastet.

8. Forstseilwinde nach Anspruch 7, **dadurch gekennzeichnet, dass** das Freilaufventil (65) von einer Feder (66) in Richtung der ersten Steuerstellung (65a) betätigbar ist und von einer elektrischen Betätigungseinrichtung (67), insbesondere einem Schaltmagnet, in Richtung der zweiten Steuerstellung (65b) betätigbar ist.

9. Forstseilwinde nach einem der Ansprüche 1 bis 8, **dadurch gekennzeichnet, dass** das Steuerventil (55) von einer Feder (60) in Richtung der ersten Steuerstellung (55a) und von einer elektrischen Betätigungseinrichtung (61), insbesondere einem Schaltmagnet, in Richtung der zweiten Steuerstellung (55b) betätigbar ist.

10. Forstseilwinde nach einem der Ansprüche 1 bis 8, **dadurch gekennzeichnet, dass** die Steuerwegeventileinrichtung (10) von hydraulischen Ansteuerdrücken betätigt ist, wobei das Steuerventil (55) von einer Feder (60) in Richtung der ersten Steuerstellung (55a) und von den hydraulischen Ansteuerdrücken der Steuerwegeventileinrichtung (10) in Richtung der zweiten Steuerstellung (55b) betätigbar ist.

11. Forstseilwinde nach einem der Ansprüche 1 bis 10, **dadurch gekennzeichnet, dass** die Federeinrichtung (35) der Federspeicherbremse (9) und eine in Richtung der Durchflussstellung (45b) wirkende Federeinrichtung (47) der Bypassventileinrichtung (45) bzw. die Federeinrichtung (121) des Vorsteuerventils (120) derart ausgelegt sind, dass bei in die zweite Steuerstellung (55b) betätigtem Steuerventil (55) zeitlich zuerst die Bypassventileinrichtung (45) in die Sperrstellung (45a) betätigt wird und zeitlich anschließend die Federspeicherbremse (9) in die Lösestellung beaufschlagt wird.

12. Forstseilwinde nach einem der Ansprüche 1 bis 10, **dadurch gekennzeichnet, dass** in der Bremslösedruckleitung (36) ein in Richtung zur Federspeicherbremse (9) öffnendes, federvorgespanntes Sperrventil (70), insbesondere Rückschlagventil, angeordnet ist.

13. Forstseilwinde nach Anspruch 12, **dadurch gekennzeichnet, dass** in einer das federvorgespannte Sperrventil (70) umgehenden Umgehungsleitung (71) ein in Richtung zum Steuerventil (55) öffnendes, unvorgespanntes Sperrventil (72), insbesondere Rückschlagventil, angeordnet ist.

14. Forstseilwinde nach einem der Ansprüche 1 bis 13, **dadurch gekennzeichnet, dass** in einer die erste Druckmittelleitung (15) mit der zweiten Druckmittelleitung (16) verbindenden Leitung (40) ein in Richtung zur ersten Druckmittelleitung (15) öffnendes, federvorgespanntes Sperrventil (41), insbesondere Rückschlagventil, angeordnet ist.

15. Forstseilwinde nach einem der Ansprüche 1 bis 14, **dadurch gekennzeichnet, dass** die Forsteilwinde (1) mit einer von einem weiteren Antriebsmotor (6) angetriebenen Auswerferrolle (7) für das Seil (4) versehen ist, wobei der weitere Antriebsmotor (6) als Hydraulikmotor ausgebildet ist, der mittels einer ersten Anschlussleitung (25) und einer zweiten Anschlussleitung (26) an eine den weiteren Antriebsmotor (6) steuernde Steuerwegeventileinrichtung (20) angeschlossen ist.

16. Forstseilwinde nach Anspruch 15, **dadurch gekennzeichnet, dass** in einer die erste Druckmittelleitung (15) mit der zweiten Druckmittelleitung (16) verbindenden Verbindungsleitung (100) ein in Richtung zur ersten Druckmittelleitung (15) öffnendes, unvorgespanntes Sperrventil (101), insbesondere Rückschlagventil, angeordnet ist, wobei in der Verbindungsleitung (100) ein von dem Druck in der ersten Anschlussleitung (25) gesteuertes Ventil (102) angeordnet ist, das eine Sperrstellung (102a) und eine Durchflussstellung (102b) aufweist.

17. Forstseilwinde nach Anspruch 16, **dadurch gekennzeichnet, dass** das Ventil (102) von einer Feder (103) in Richtung der Durchflussstellung (102b) und von dem Druck in der ersten Anschlussleitung (25) in Richtung der Sperrstellung (102a) betätigt ist.

18. Mobile Arbeitsmaschine, insbesondere eine ferngesteuerte mobile Arbeitsmaschine ohne Fahrerarbeitsplatz, mit einer Forsteilwinde (1) nach einem der vorangegangenen Ansprüche.

## Claims

1. Forestry rope winch (1) having a rope drum (3) which is driven by a drive motor (2) and on which a rope (4) is wound, wherein the rope drum is operatively connected to a brake device (9), wherein the brake device (9) is configured as a spring brake which is loaded in the direction of a braking position by a spring device (35) and in the direction of a release position by a hydraulic brake-release pressure prevailing in a brake-release-pressure line (36), wherein the drive motor (2) is configured as a hydraulic motor which is connected by means of a first pressure-medium line (15) and a second pressure-medium line (16) to a directional-control-valve device (10) that controls the drive motor (2), wherein provision is made of a bypass-valve device (45) which connects the pressure-medium lines (15, 16) and which is arranged in a connecting line (46) connecting the two pressure-medium lines (15, 16) and which has a blocking position (45a) and a throughflow position (45b), wherein the bypass-valve device (45) is actuated in the direction of the blocking position (45a) by a hydraulic control pressure prevailing in a control line (50), wherein the spring brake (9) and the bypass-valve device (45) are jointly actuated by a control valve (55), wherein the control valve (55) controls the control pressure actuating the bypass-valve device (45) in the direction of the blocking position (45a), and the brake-release pressure actuating the spring brake (9) in the direction of the release position, in such a way that, with the spring brake (9) actuated into the release position, the bypass-valve device (45) is in a state loaded into the blocking position (45a) and, with the spring brake (9) actuated into the braking position, the bypass-valve device (45) is in a state loaded into the throughflow position (45b), wherein, in a first control position (55a) of the control valve (55), the spring brake (9) is in a state loaded into the braking position and the bypass-valve device (45) is in a state loaded into the throughflow position (45b) and, in a second control position (55b) of the control valve (55), the spring brake (9) is in a state loaded into the release position and the bypass-valve device (45) is in a state loaded into the blocking position (45a), **characterized in that**, with the control valve (55) actuated into the second control position (55b), firstly, in terms of time, the bypass-valve device (45) is actuated into the blocking position (45a) and subsequently, in terms of time, the spring brake (9) is loaded into the release position.

2. Forestry rope winch according to Claim 1, **characterized in that** the bypass-valve device (45) is actuated in the direction of the blocking position (45a) by the control pressure prevailing in the control line (50).

3. Forestry rope winch according to Claim 1 or 2, **characterized in that** the bypass-valve device (45) is configured as a bypass valve which is actuated directly by the control valve (55), wherein the control valve (55), in the first control position (55a), connects the brake-release-pressure line (36) and the control line (50) to a container (13) and, in the second control position (55b), connects the brake-release-pressure line (36) and the control line (50) to a control-pressure source (56).

4. Forestry rope winch according to Claim 1 or 2, **characterized in that** the bypass-valve device (45) is configured as a bypass valve which is pilot-controlled by the control valve (55), wherein the control valve (55) actuates a pilot-control valve (120) which, in the first switching position (120a), connects the control line (50) to a container (13) and, in the second control position (120b), connects the control line (50) to a control-pressure source (56), wherein the control valve (55), in a first control position (55a), connects the brake-release-pressure line (36) and a pilot-control line (122), routed to the pilot-control valve (120), to a container (13), and, in a second control position (55b), connects the brake-release-pressure line (36) and the pilot-control line (122) to a control-pressure source (56).

5. Forestry rope winch according to Claim 4, **characterized in that** the pilot-control valve (120) is actuated in the direction of the first control position (120a) by a spring (121) and in the direction of the second control position (120b) by the pilot-control pressure prevailing in the pilot-control line (122).

6. Forestry rope winch according to one of Claims 1 to 5, **characterized in that** the control line (50) is connected to the control-pressure source (56) and the first pressure-medium line (15) by means of a shuttle valve (90).

7. Forestry rope winch according to one of Claims 1 to 6, **characterized in that**, in the control line (50), there is arranged a freewheeling valve (65) which, in a first control position (65a), opens the control line (50) and, in a second control position (65b), relieves pressure in a portion, connected to the bypass-valve device (45), of the control line (50) to a container (13).

8. Forestry rope winch according to Claim 7, **characterized in that** the freewheeling valve (65) is actuatable in the direction of the first control position (65a) by a spring (66) and is actuatable in the direction of the second control position (65b) by an electrical actuating device (67), in particular a switching magnet.

9. Forestry rope winch according to one of Claims 1 to 8, **characterized in that** the control valve (55) is actuatable in the direction of the first control position (55a) by a spring (60) and in the direction of the second control position (55b) by an electrical actuating device (61), in particular a switching magnet.

10. Forestry rope winch according to one of Claims 1 to 8, **characterized in that** the directional-control-valve device (10) is actuated by hydraulic actuation pressures, wherein the control valve (55) is actuatable in the direction of the first control position (55a) by a spring (60) and in the direction of the second control position (55b) by the hydraulic actuation pressures of the directional-control-valve device (10).

11. Forestry rope winch according to one of Claims 1 to 10, **characterized in that** the spring device (35) of the spring brake (9) and a spring device (47), acting in the direction of the throughflow position (45b), of the bypass-valve device (45) or the spring device (121) of the pilot-control valve (120) are designed in such a way that, with the control valve (55) actuated into the second control position (55b), firstly, in terms of time, the bypass-valve device (45) is actuated into the blocking position (45a) and subsequently, in terms of time, the spring brake (9) is loaded into the release position.

12. Forestry rope winch according to one of Claims 1 to 10, **characterized in that** a spring-preloaded shut-off valve (70), in particular check valve, that opens in the direction of the spring brake (9) is arranged in the brake-release-pressure line (36).

13. Forestry rope winch according to Claim 12, **characterized in that** a non-preloaded shut-off valve (72), in particular check valve, that opens in the direction of the control valve (55) is arranged in a bypass line (71) which bypasses the spring-preloaded shut-off valve (70).

14. Forestry rope winch according to one of Claims 1 to 13, **characterized in that** a spring-preloaded shut-off valve (41), in particular check valve, that opens in the direction of the first pressure-medium line (15) is arranged in a line (40) which connects the first pressure-medium line (15) to the second pressure-medium line (16).

15. Forestry rope winch according to one of Claims 1 to 14, **characterized in that** the forestry rope winch (1) is provided with an ejector roller (7) for the rope (4) that is driven by a further drive motor (6), wherein the further drive motor (6) is configured as a hydraulic motor which is connected by means of a first connection line (25) and a second connection line (26) to a directional-control-valve device (20) that controls the further drive motor (6).

16. Forestry rope winch according to Claim 15, **characterized in that** a non-preloaded shut-off valve (101), in particular check valve, that opens in the direction of the first pressure-medium line (15) is arranged in a connecting line (100) which connects the first pressure-medium line (15) to the second pressure-medium line (16), wherein, in the connecting line (100), there is arranged a valve (102) which is controlled by the pressure in the first connection line (25) and which has a blocking position (102a) and a throughflow position (102b).

17. Forestry rope winch according to Claim 16, **characterized in that** the valve (102) is actuated in the direction of the throughflow position (102b) by a spring (103) and in the direction of the blocking position (102a) by the pressure in the first connection line (25).

18. Mobile working machine, in particular a remote-controlled mobile working machine without a driver's workstation, having a forestry rope winch (1) according to one of the preceding claims.

## Revendications

1. Treuil forestier (1), qui comporte un tambour de câble (3) entraîné par un moteur d'entraînement (2), sur lequel est enroulé un câble (4), le tambour de câble étant en liaison fonctionnelle avec un dispositif de freinage (9), le dispositif de freinage (9) étant formé comme un frein à ressort, qui est soumis à l'action d'un dispositif à ressort (35) en direction d'une position de freinage et d'une pression de desserrage de frein hydraulique présente dans une conduite de pression de desserrage de frein (36) en direction d'une position de desserrage, le moteur d'entraînement (2) étant formé comme un moteur hydraulique, qui est connecté au moyen d'une première conduite de fluide sous pression (15) et d'une deuxième conduite de fluide sous pression (16) à un dispositif distributeur de commande (10) commandant le moteur d'entraînement (2), un dispositif de soupape de dérivation (45) raccordant les conduites de fluide sous pression (15, 16) étant prévu, lequel est disposé dans une conduite de raccordement (46) raccordant les deux conduites de fluide sous pression (15, 16) et qui présente une position de blocage (45a) et une position de passage (45b), le dispositif de soupape de dérivation (45) étant actionné en direction de la position de blocage (45a) par une pression de commande hydraulique présente dans une conduite de commande (50), le frein à ressort (9) et le dispositif de soupape de dérivation (45) étant pilotés conjointement par une soupape de commande (55), la soupape de commande (55) commandant la pression de commande actionnant le dispositif de soupape de dérivation (45) en direction de la position de blocage (45a) et la pression de desserrage du frein actionnant le frein à ressort (9) en direction de la position de desserrage de telle manière que, lorsque le frein à ressort (9) est piloté dans la position de desserrage, le dispositif de soupape de dérivation (45) est soumis à une action dans la position de blocage (45a) et, lorsque le frein à ressort (9) est piloté dans la position de freinage, le dispositif de soupape de dérivation (45) est soumis à une action dans la position de passage (45b), dans une première position de commande (55a) de la soupape de commande (55), le frein à ressort (9) étant soumis à une action dans la position de freinage et le dispositif de soupape de dérivation (45) étant soumis à une action dans la position de passage (45b) et, dans une deuxième position de commande (55b) de la soupape de commande (55), le frein à ressort (9) étant soumis à une action dans la position de desserrage et le dispositif de soupape de dérivation (45) étant soumis à une action dans la position de blocage (45a), **caractérisé en ce que**, lorsque la soupape de commande (55) est actionnée dans la deuxième position de commande (55b), le dispositif de soupape de dérivation (45) est d'abord actionné dans le temps dans la position de blocage (45a) puis, dans le temps, le frein à ressort (9) est soumis à une action dans la position de desserrage.

2. Treuil forestier selon la revendication 1, **caractérisé en ce que** le dispositif de soupape de dérivation (45) est actionné en direction de la position de blocage (45a) par la pression de commande présente dans la conduite de commande (50).

3. Treuil forestier selon la revendication 1 ou 2, **caractérisé en ce que** le dispositif de soupape de dérivation (45) est formé comme une soupape de dérivation actionnée directement par la soupape de commande (55), la soupape de commande (55) raccordant dans la première position de commande (55a) la conduite de pression de desserrage de frein (36) et la conduite de commande (50) à un contenant (13) et raccordant dans la deuxième position de commande (55b) la conduite de pression de desserrage de frein (36) et la conduite de commande (50) à une source de pression de commande (56).

4. Treuil forestier selon la revendication 1 ou 2, **caractérisé en ce que** le dispositif de soupape de dérivation (45) est formé comme une soupape de dérivation commandée par pilote par la soupape de commande (55), la soupape de commande (55) actionnant une soupape pilote (120), qui raccorde, dans la première position de commutation (120a), la conduite de commande (50) à un contenant (13) et raccorde, dans la deuxième position de commande (120b), la conduite de commande (50) à une source de pression de commande (56), la soupape de commande (55) raccordant dans une première position de commande (55a) la conduite de pression de desserrage de frein (36) et une conduite pilote (122) guidée vers la soupape pilote (120) à un contenant (13) et raccordant dans une deuxième position de commande (55b) la conduite de pression de desserrage de frein (36) et la conduite pilote (122) à une source de pression de commande (56).

5. Treuil forestier selon la revendication 4, **caractérisé en ce que** la soupape de commande pilote (120) est actionnée par un ressort (121) en direction de la première position de commande (120a) et par la pression de commande pilote présente dans la conduite de commande pilote (122) en direction de la deuxième position de commande (120b).

6. Treuil forestier selon l'une des revendications 1 à 5, **caractérisé en ce que** la conduite de commande (50) est raccordée à la source de pression de commande (56) et à la première conduite de fluide sous pression (15) au moyen d'une soupape à deux voies (90).

7. Treuil forestier selon l'une des revendications 1 à 6, **caractérisé en ce qu'**est disposée dans la conduite de commande (50) une soupape de roue libre (65), qui ouvre la conduite de commande (50) dans une première position de commande (65a) et décharge une section de la conduite de commande (50) raccordée au dispositif de soupape de dérivation (45) vers un contenant (13) dans une deuxième position de commande (65b).

8. Treuil forestier selon la revendication 7, **caractérisé en ce que** la soupape de roue libre (65) peut être actionnée par un ressort (66) en direction de la première position de commande (65a) et peut être actionnée par un dispositif d'actionnement (67) électrique, en particulier un aimant de commutation, en direction de la deuxième position de commande (65b).

9. Treuil forestier selon l'une des revendications 1 à 8, **caractérisé en ce que** la soupape de commande (55) peut être actionnée par un ressort (60) en direction de la première position de commande (55a) et par un dispositif d'actionnement (61) électrique, en particulier un aimant de commutation, en direction de la deuxième position de commande (55b).

10. Treuil forestier selon l'une des revendications 1 à 8, **caractérisé en ce que** le dispositif de soupape de commande (10) est actionné par des pressions de pilotage hydrauliques, la soupape de commande (55) pouvant être actionnée par un ressort (60) en direction de la première position de commande (55a) et par les pressions de pilotage hydrauliques du dispositif distributeur de commande (10) en direction de la deuxième position de commande (55b).

11. Treuil forestier selon l'une des revendications 1 à 10, **caractérisé en ce que** le dispositif à ressort (35) du frein à ressort (9) et un dispositif à ressort (47) du dispositif à soupape de dérivation (45) agissant en direction de la position de passage (45b) ou le dispositif à ressort (121) de la soupape pilote (120) sont conçus de telle manière que, lorsque la soupape de commande (55) est actionnée dans la deuxième position de commande (55b), le dispositif de soupape de dérivation (45) est d'abord actionné dans le temps dans la position de blocage (45a) puis, dans le temps, le frein à ressort (9) est soumis à une action dans la position de desserrage.

12. Treuil forestier selon l'une des revendications 1 à 10, **caractérisé en ce qu'**est disposée, dans la conduite de pression de desserrage de frein (36), une soupape d'arrêt (70) précontrainte par ressort, en particulier une soupape anti-retour, s'ouvrant en direction du frein à ressort (9).

13. Treuil forestier selon la revendication 12, **caractérisé en ce qu'**est disposée, dans une conduite de contournement (71) contournant la soupape d'arrêt (70) précontrainte par ressort, une soupape d'arrêt (72) non précontrainte, en particulier une soupape anti-retour, s'ouvrant en direction de la soupape de commande (55).

14. Treuil forestier selon l'une des revendications 1 à 13, **caractérisé en ce qu'**est disposée, dans une conduite (40) raccordant la première conduite de fluide sous pression (15) à la deuxième conduite de fluide sous pression (16), une soupape d'arrêt (41) précontrainte par ressort, en particulier une soupape anti-retour, s'ouvrant en direction de la première conduite de fluide sous pression (15).

15. Treuil forestier selon l'une des revendications 1 à 14, **caractérisé en ce que** le treuil forestier (1) est pourvu d'un rouleau d'éjection (7) pour le câble (4) entraîné par un autre moteur d'entraînement (6), l'autre moteur d'entraînement (6) étant formé comme un moteur hydraulique, qui est connecté au moyen d'une première conduite de connexion (25) et d'une deuxième conduite de connexion (26) à un dispositif distributeur de commande (20) commandant l'autre moteur d'entraînement (6).

16. Treuil forestier selon la revendication 15, **caractérisé en ce qu'**est disposée, dans une conduite de raccordement (100) raccordant la première conduite de fluide sous pression (15) à la deuxième conduite de fluide sous pression (16), une soupape d'arrêt (101) non précontrainte, en particulier une soupape anti-retour, s'ouvrant en direction de la première conduite de fluide sous pression (15), une soupape (102) commandée par la pression dans la première conduite de connexion (25), qui présente une position de blocage (102a) et une position de passage (102b), étant disposée dans la conduite de raccordement (100).

17. Treuil forestier selon la revendication 16, **caractérisé en ce que** la soupape (102) est actionnée par un ressort (103) en direction de la position de passage (102b) et par la pression dans la première conduite de connexion (25) en direction de la position de blocage (102a).

18. Machine de travail mobile, en particulier machine de travail mobile télécommandée sans poste de conduite, avec un treuil forestier (1) selon l'une des revendications précédentes.
